# EUROPEAN PATENT APPLICATION

(11) **EP 2 420 133 A1**
(43) Date of publication of application: **22.02.2012**
(21) Application number: 10764040.1
(22) Date of filing: 26.03.2010
(51) Int. Cl.: A01G 9/02

(54) **INTEGRATED VERTICAL GREENING MODULE**

(30) Priority: 13.04.2009 CN 200910029409
(71) Applicant: Nanjing Lu Se Zu He Environmental Protection Ltd., Jiangsu 210003 (CN)
(72) Inventor: ZHAO, Feiyun, Jiangsu 210003 (CN); ZHAO, Lin, North York , ON M2M 1C9 (CA)
(74) Representative: Akers, Noel James
(86) International application number: PCT/CN2010/000331
(87) International publication number: WO 2010/118627

(57) **Abstract**

The invention includes a box with a water inlet on top, drainage outlets in the bottom, and multiple nursing cells horizontally and vertically arranged inside. The nursing cells are permanently linked inside the box. Each nursing cell has reservoir grooves in the bottom, and light and air circulation cells around all sides. A slit is placed on adjacent walls of nursing cells in each row, and also in each column, thereby connecting two adjacent nursing cells. The planting module is integrated, ready for use without any assembly required. Light and air circulation cells around nursing cells provide sufficient sunlight for growth of the plants inside. Reservoir grooves in the cell bottom can better keep moisture and nutrients inside. Horizontal and vertical slits in the cell walls provide even and rapid distribution for water that enters the module.

## Description

FIELD OF THE INVENTION

The present invention relates to devices relevant to landscaping and horticulture, more particularly to an integrated vertical planting module for planting on walls.

BACKGROUND OF THE INVENTION

This inventor, on March 17, 2009, submitted a patent application for an invention entitled: "Vertical Planting Module" (Chinese Application Number: 200910026012.0). The planting module mainly consists of a box and an insert, where the insert is formed of at least one vertical divider in the vertical direction that permanently links multiple parallel horizontal dividers with a certain distance in-between and at a tilted position, and where the insert slides into the box via insert grooves configured on side walls of the box. Furthermore a plant growth mat is placed between the insert and a bottom of the box.

The technical design of the above patent application for an invention has obvious advantages over a prior planting module that is formed of a box and vertical dividers and horizontal dividers inserted therein: it turns the vertical and horizontal dividers into an integrated whole insert, greatly reducing the deformability of the dividers, and providing much convenience and speed of assembly of one whole insert over the assembly of multiple inserts. Furthermore the use of a plant growth mat can prevent the loss of water and of plant growth medium caused by the water flow, thereby serving the function of transporting water, storing water, and providing an aeration layer for plant roots.

But the planting module as described above still has inadequacies in that it still is an assembly, even though the insert has integrated the horizontal and vertical dividers into a whole, reducing the deformability of the whole, but after the use during a prolonged time the horizontal and vertical dividers may still more or less experience some deformation, hindering connections of the insert inside the box, and affecting efficiency; in addition, nursing cells are tightly arranged in rows and columns, such that each nursing cell can only receive light from the front, and it is not possible for it to receive light from other sides; besides, even though the plant-growth mat has the ability to store water, but it can hold water only for a short time, which is not beneficial for plants growing in moist environments.

SUMMARY OF THE INVENTION

The purpose of the present invention is to overcome the inadequacies in the current technology as described above, providing an integrated vertical planting module with a nursing cell that is capable of receiving light from multiple sides, and of storing water and keeping moisture in a bottom of the cell, which is realized in accordance with the technical design as described below:

The module comprises a box, configured with a water inlet on a top of the box, configured with drainage outlets in a bottom of the box, and configured with multiple nursing cells arranged in horizontal and vertical directions inside the box, wherein the nursing cells are permanently linked inside the box, configured with reservoir grooves in a bottom of each nursing cell, configured with light and air circulation cells around all sides of the nursing cell, configured with a slit on walls of adjacent nursing cells in each row arranged horizontally, and also configured with a slit on walls of adjacent nursing cells in each column arranged vertically, thereby connecting two adjacent nursing cells, and wherein below each column of nursing cells is configured a bottom cell, and a connecting slit is placed on a cell wall between the bottom cell and an adjacent nursing cell there above.

A further design is that the water inlet on the top of the box consists of multiple groups of water inlet slits, each group of water inlet slits corresponding to a nursing cell below the top of the box.

A still further design is that the nursing cell has an elliptical cell body.

A still further design is that the bottom cell has a semi-elliptical cell body.

The box and the nursing cells of the planting module of the present invention are permanently linked by methods of casting, so that no assembly is required between the box and an insert, thereby improving efficiency.

Light and air circulation cells are configured around all sides of each nursing cell in the present invention, in addition to receiving light in the front, making it possible for all sides of the nursing cell to receive light, to give more sufficient light to plants inside the nursing cell for better photosynthesis for the growth of the plants. At the same time light and air circulation cells allow the sunlight to shine on a wall, and allow sufficient ventilation for a wall on which the module hangs, thereby preventing buildings from corrosion due to moisture.

The reservoir grooves of the present invention can better keep moisture and nutrients inside the nursing cell, guaranteeing the moisture needed by the plants for their growth. When a large amount of water flows in, rapid distribution is achieved via horizontal slits 21 b in walls of nursing cells, preventing soaking and rotting of plants caused by an excess of water. Similarly vertical slits 21 a in walls of nursing cells can evenly distribute the water that flows into a module.

The bottom cell of the present invention can prevent the outflow of the plant growth medium and of the nutrients, reduce the loss of soil and water, and provide support for an entire module to prevent it from becoming deformed.

DESCRIPTION OF THE DRAWINGS

FIG. 1 is a depiction of a structure of the present invention.

FIG. 2 is a left view of a structure of the present invention as shown in FIG. 1.

FIG. 3 is an enlarged view at D in a top view of a structure of the present invention as shown in FIG. 2.

FIG. 4. is a top view of a structure of the present invention as shown in FIG. 1.

FIG. 5. is a sectional view as indicated at M-M in a depiction of a structure of the present invention as shown in FIG. 1.

FIG. 6. is a sectional view as indicated at N-N in a depiction of a structure of the present invention as shown in FIG. 1.

FIG. 7. is a depiction of a structure of the planting module with nursing cells having a circular cell body.

FIG. 8. is a depiction of a structure of the planting module with nursing cells having an octagonal cell body.

LIST OF REFERENCE SYMBOLS

10 a box; 11 a top board; 12 water inlet slits; 13 installation grooves; 14 holes; 15 a positioning groove; 16 drainage outlets; 20 nursing cells; 21 a, 21 b slits; 22 reservoir grooves; 30 light and air circulation cells; and 40 bottom cells.

DETAILED DESCRIPTION

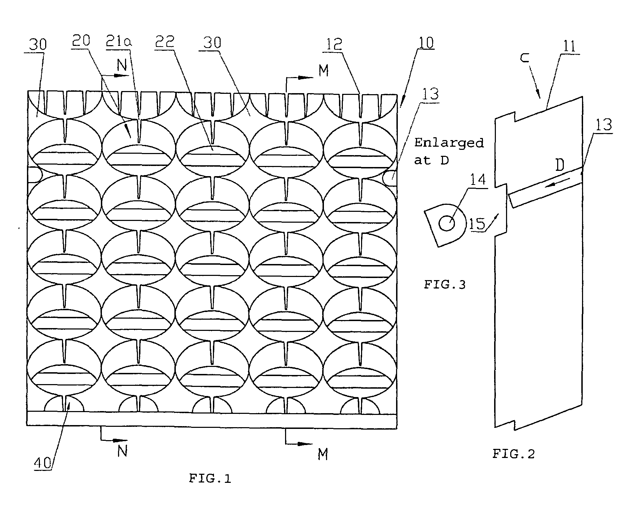

Referring to FIG. 1 and FIG. 2, a planting module of the present invention contains a box 10. Front and back sides of the box 10 have a rectangular shape, and left and right sides of the box 10 are basically shaped as a parallelogram. A water inlet on a top of the box consists of multiple groups of water inlet slits 12 on a top board 11, and each group has 3 water inlet slits 12 corresponding to a nursing cell below, referring to FIG. 3. Symmetric installation grooves 13 are configured on the left and the right sides respectively, and have holes 14 in bottoms of the grooves for securing the planting module. Installation grooves 13 provide operating space for screws to go in and out. The planting module is secured on a positioning board on a wall by screws through holes 14, while it is positioned on the positioning board on the wall via a positioning groove 15 on the back side of the module.

The planting module in the present invention is made by casting using ultravioletresistant, non-polluting and recyclable PE materials, therefore nursing cells 20 are permanently linked inside the box 10, not requiring any assembly. The planting module is ready for use, eliminating assembly and improving efficiency.

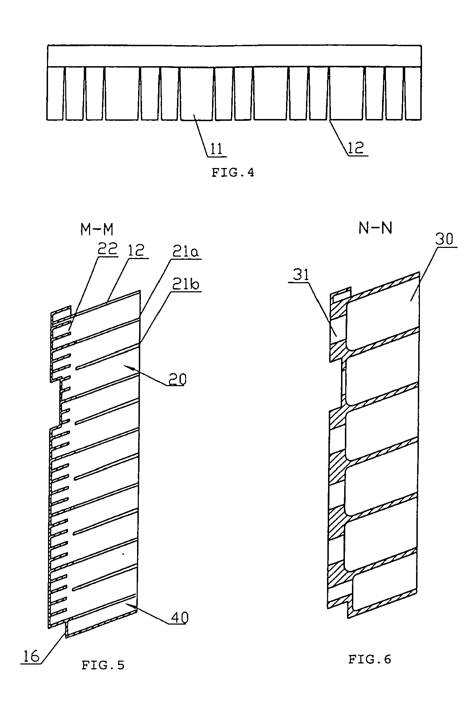

Inside the box 10 are configured twenty-five nursing cells 20 arranged in horizontal and vertical directions. Each nursing cell 20 has an elliptical cell body, is tilted such that the nursing cell is higher towards the front side and lower towards the back side of the box, and has four reservoir grooves 22 in a bottom of each nursing cell 20, referring to FIG. 5. For each row of 5 nursing cells arranged horizontally, a slit 21 b is placed in walls of adjacent nursing cells, whereby connecting two horizontally adjacent nursing cells. Similarly for each column of 5 nursing cells arranged vertically, a slit 21 a is also placed in walls of adjacent nursing cells, whereby connecting two vertically adjacent nursing cells. Width of the vertical slit 21a is about 1-2mm, generally only allowing flow of water but hardly allowing any outflow of plant growth medium.

Around all sides of a nursing cell are configured light and air circulation cells 30, which is a hollow structure, referring to FIG. 6. In addition to receiving light in the front, light can also reach inside of the nursing cell 20 through its wall, making it possible for plants inside to receive more sunlight for better photosynthesis for the growth of the plants. The structure of the light and air circulation cell also makes it possible for the sunlight to reach the wall behind the module, and for the wind to reach the wall on which the module hangs, thereby preventing buildings from corrosion by moisture.

Below each column of nursing cells is configured a bottom cell 40, which has a semi-elliptical cell body, and similarly is also tilted such that the bottom cell is higher towards the front side and lower towards the back side of the box. A connecting slit 21a is placed on a cell wall between the bottom cell 40 and an adjacent nursing cell 20 there above. The bottom cell 40 can prevent outflow of plant growth medium, reduce loss of water, nutrients and plant growth medium, and provide support for the entire module to prevent it from becoming deformed.

When planting on a vertical wall, secure multiple planting modules on the wall while placing them tightly next to each other, fill the nursing cells with growth medium, and install corresponding irrigation systems. Water flows in via the water inlet slits 12 on the top board 11 of the module, and flows down towards the nursing cells below via vertical slits 21 a in walls of nursing cells. Part of the water that enters each nursing cell is stored inside reservoir grooves 22, where the water can keep plant growth medium moist inside the nursing cells for a long time, while the rest of the water flows into bottom cells 40, and any overflow wherefrom is drained via drainage outlets 16.

If a nursing cell overflows, water enters adjacent nursing cells via horizontal slits 21 b, thereby achieving rapid distribution of a large amount of water inflow and preventing soaking and rotting of plants in nursing cells caused by an excess of water. Similarly width of the horizontal slits 21 b is also only 1-2mm, only allowing flow of water but hardly allowing any outflow of soil.

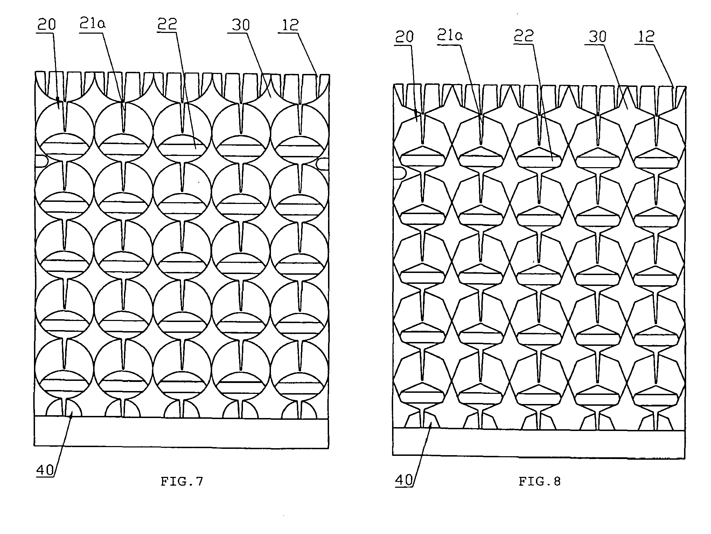

Nursing cells and light and air circulation cells can also be designed into other shapes, such as the circular nursing cells and the octagonal nursing cells with their respective light and air circulation cells as shown in FIG. 7 and FIG. 8. Therefore the present invention is not limited by the embodiment as described above.

## Claims

1. An integrated vertical planting module, comprising a box configured with a water inlet on a top of the box, configured with drainage outlets in a bottom of the box, and configured with multiple nursing cells arranged in horizontal and vertical directions inside the box, wherein the nursing cells are permanently linked inside the box, configured with reservoir grooves in a bottom of each nursing cell, configured with light and air circulation cells around all sides of the nursing cell, configured with a slit on adjacent cell walls of nursing cells in each row arranged horizontally, and also configured with a slit on adjacent cell walls of nursing cells in each column arranged vertically, thereby connecting two adjacent nursing cells; and wherein below each column of nursing cells is configured a bottom cell, and a connecting slit is placed on a cell wall between the bottom cell and an adjacent nursing cell there above.

2. The integrated vertical planting module of claim 1, wherein the water inlet on the top of the box consists of multiple groups of water inlet slits, each group of water inlet slits corresponding to a nursing cell below the top of the box.

3. The integrated vertical planting module of claim 2, wherein the nursing cell has an elliptical cell body.

4. The integrated vertical planting module of claim 2, wherein the bottom cell has a semi-elliptical cell body.
